# EUROPEAN PATENT SPECIFICATION

(11) **EP 1 515 122 B1**
(45) Date of publication and mention of the grant of the patent: **25.02.2015**
(21) Application number: 03019692.7
(22) Date of filing: 09.09.2003
(51) Int. Cl.: G01C 21/36, G08G 1/0969

(54) **Navigation device and method providing cost information**
Navigationsvorrichtung und Verfahren mit Kostenschätzung
Dispositif et méthode de navigation avec estimation de coûts

(43) Date of publication of application: 16.03.2005
(73) Proprietor: Harman Becker Automotive Systems GmbH, 76307 Karlsbad (DE)
(72) Inventor: Brülle-Drews, Christian, 22159 Hamburg (DE); Schirmer, Hartmut, 25421 Pinneberg (DE)
(74) Representative: Bertsch, Florian Oliver

(56) References cited:
- EP-A- 0 638 887
- EP-A- 1 077 362
- US-A- 5 608 635
- US-B1- 6 256 579
- US-B1- 6 542 815

## Description

This invention relates to a navigation device comprising a database system comprising data which contain road map information used for generating a road map for the navigation device, a processing unit for processing the data containing road map information, and a selecting unit for selecting a particular road on the map. The invention further relates to a method for providing cost information in a navigation device and to a method for calculating the travel time to a predetermined destination, which also depends on the cost information provided in the navigation device.

### Related Art

In a conventional navigation device usually used for vehicles, a current position of the vehicle is detected and the driver of the vehicle is guided to a predetermined destination by using the road map information provided by the database system of the navigation device.

In a conventional navigation device its user also has the possibility of choosing different routes. The user has the option to choose the fastest route where the travel time should be minimized or the shortest route where the travel distance should be minimized, or a scenic route where the route should have scenic views or where sightseeing should be possible or points of interest should be located along the way. The user of the navigation device also has the possibility of "telling" the navigation device that, for determining a route to a predetermined destination, motorways, or tunnels, or right or left turns should be avoided or even excluded.

Furthermore, for the calculation of a route to a predetermined destination a wide variety of different routes are possible and may be proposed by the navigation device. For some of these routes, however, the costs arising in connection with a particular route can be very different. This is due to the fact that for some sections of a route a road toll has to be paid. There are cases where different routes to a predetermined destination all lying within a small range of travel time have different costs which may differ from each other by a large amount. Especially, for a vehicle fleet management, where a large number of vehicles have to be controlled, these extra costs arising from road toll can play an important role for a cost-effective handling of a vehicle fleet.

European patent application EP 1 077 362 A1 discloses a route guidance apparatus which calculates the monetary costs of a planned route and compares these costs to those of public transportation means. International patent application WO 99/14701 describes a navigation system which calculates an optimal route based on the distance, the travel time and the number of turns.

Therefore, in modern navigation devices there arises the need for providing detailed information which can be used for determining the exact costs when a particular route to a predetermined destination is selected.

### Summary of the Invention

This need is met by a navigation device according to claim 1 and a method for providing cost information according to claim 13. The database system of the navigation device fur-ther comprises data containing cost information, the cost information comprising information about the costs arising in connection with selecting a particular road on the map. With this cost information the exact costs when using a particular route to a predetermined destination may be calculated and displayed to the user of the navigation device or to any third person managing the routes of a plurality of vehicles., e.g., for a vehicle fleet management.

Normally, the data comprising road map information is represented as a series of road sections. These road sections can be represented in different mathematical forms, be it vectors having a length and a direction of a road section, be it clothoids, or any other way to represent road map data. According to the invention, the information about the costs arising in connection with selecting a particular road section of the map is linked to a particular road section. This means that for every road where costs arise in connection with the use of this road the relevant costs are linked to the road section. When a particular route to a predetermined destination is chosen, the road sections which build the route can be determined together with their respective costs.

The database system which is used in the navigation device can be configured in several different ways. According to a first embodiment of the invention the database system may comprise a first database comprising the data containing the road map information. If the road map information is represented as a series of road sections, the first database comprises the different road sections. Furthermore, a first database may also comprise the cost information, each item of cost information being linked to a particular road section. With this arrangement it is easy to calculate the costs arising in connection with the use of a particular route, when the cost information is "attached" to every road section, the sum of the road sections forming the route to a particular destination and the sum of the costs of each road section being the total costs.

The database system may also comprise a second database which comprises the data containing the cost information. In this arrangement, the first database comprising the road map information represented as a series of road sections may comprise geographical position data for each road section. In this embodiment the second database comprises the data containing the cost information and the geographical position data, so that each item of cost information is linked to at least one geographical position data. It should be understood that there are many other possibilities of including the cost information in the database system. The cost information may depend on the used vehicle type (passenger cars, lorry, motor bikes, the length of the used vehicle, the weight, number of passengers, etc). Therefore, an input means may be provided in order to input the parameters needed to determine the costs depending on the used vehicle.

According to the invention the cost information may comprise first costs depending on the travelled distance and/or second costs depending on the selected route. In the present context the first costs are the costs that depend only on the travelled distance and, perhaps, on the used type of vehicle, such as fuel consumption. These first costs may further comprise the costs depending on the value of the use vehicle and of the costs needed for assurances, etc. These first costs, normally expressed as costs per kilometer, mainly depend on the travelled distance, since these costs mainly vary with the travelled kilometers. The first costs can also depend on the type of road that is used, i.e. whether a highway, a country road or streets in a town are used. Furthermore, these costs can also depend on the fact whether the used road is a paved road or not. These costs do normally not depend on the selected route, so that these costs in the present context are referred to as first costs. The second costs which depend on the selected route should comprise all the costs that have to be paid when a particular road is used, such as road toll, costs for vignettes, costs for ferryboats, tunnel fees, toll per distance or toll for motor rail trains. These second costs include all the costs that have to be paid as an extra fee when a particular section of a road is used. These costs may also comprise the fees that have to be paid for passing a bridge. These second costs can also depend on the travelled distance when a toll system is used, where the vehicles are charged per kilometer, as it is, e.g., the case in Italy. Although these second costs may also depend on the travelled distance, they mainly depend on the selected route and are called second costs in the present context. In the present context the term "vignette" is used to describe the situation where a lump sum has to be paid for the right to use a particular kind of road. These vignettes are currently used, e.g., in Austria or Switzerland for the use of the highways. In this case the costs do not depend on the travelled distance, so that a lump sum has to be paid not depending on the fact that the driver of the vehicle either drives a very short distance on these roads or a very long distance. These vignettes are normally valid for a certain period of time, e.g., several months or one year. The first costs may also depend on the time. For the transportation of goods, for example, costs per time unit may be provided. The total costs may then depend on the travel time. If for the use of a certain route the driver has to wait in order to use a certain part of the route (e.g., waiting for a ferryboat), the first costs will also depend on the needed travel time. For the calculation of the time-depending costs, time tables (of ferryboats) could be provided in order to calculate the exact waiting time and the time-related costs. Furthermore, extra fees may be necessary when the user of the vehicle does not arrive in time so that the costs for a delayed arrival may also have to be considered.

The navigation device further comprises a calculation unit for calculating a route to a predetermined destination and for calculating the distance to said predetermined destination and for determining the first and/or the second costs arising in connection with selecting said particular route to said predetermined destination. The driver of the vehicle or any other person, e.g., a supervising manager for a vehicle fleet, can be informed about the first and/or the second costs. It is possible that the user of the navigation device is only interest in the second costs arising in connection with selecting a particular route, as the first costs due to fuel consumption, etc., are of no importance for the user of the vehicle. This may be the case, if the user of the vehicle does not pay the fuel or does not own the vehicle which he uses. It is also possible that the user of the navigation device is only interest in the first costs depending on the travelled distance. These first costs may be determined by taking a predetermined value of vehicle inherent costs per distance and by multiplying these vehicle inherent costs per distance with the distance of the determined route. As vehicle inherent costs a fixed value could be used, but there is also the possibility that these vehicle inherent costs are determined in a learning mode of the navigation device, where the way of driving and the fuel consumption over the past kilometers are taken into account and a future fuel consumption is calculated. For this calculation the type of the road to a predetermined destination, which lies ahead, could be taken into account, as the fuel consumption strongly depends on the fact whether the vehicle drives on a highway or in a city, or on the fact that the road lying ahead is inclined.

According to the invention the calculation unit of the navigation device calculates different routes to a predetermined destination and determines the different costs arising in connection with using each route. Due to this feature, the user of the navigation device will be able to choose a certain route depending on the different costs arising in connection with the use of each route.

The database system of the navigation device may be provided in the navigation device itself. However, the database system comprising the cost information may also be provided on a server, the server being accessible by a communication network. This communication network may be a WAN (Wide Area Network) or a WLAN (Wireless Local Area Network), especially a TCP/IP-based communication network. The navigation device may therefore include a network interface for communication with this TCP/IP-based communication network, e.g., the internet. A large host computer comprising all the necessary cost information may be accessible over the network interface of the navigation device and may provide the cost information needed to determine the costs for any particular route. Furthermore, the different components of the navigation device need not to be incorporated in one single unit. The database system may be comprised on one large server, and the selecting unit for selecting a particular route may be provided at another place, e.g., the location where the fleet management of the vehicle fleet is effected. When the cost information is provided on the server, the cost information can be updated more easily, and the updated version can be used to recalculate the costs, when the costs are changing rapidly. Furthermore, the navigation device comprises a comparison unit comparing the different costs for different routes and may further comprise a display unit for displaying these costs. This host computer or server can be regularly updated and may comprise all recent costs for a road toll, vignettes, costs for ferryboats, tunnel fees, costs for motor rails trains, etc. Furthermore, a selecting unit for selecting one of the routes provided by the navigation device: is provided.

For the above-mentioned need for having an exact cost overview for the costs arising in connection with using a particular route to a predetermined destination, a method for providing cost information in navigation devices is provided which comprises the following steps: First of all data which contain road map information are provided for generating a road map. Furthermore, data are provided which contain information about the costs. When a particular road of the map is selected, the costs arising in connection with selecting said particular road of the map are determined. According to this method the information about the costs for using a particular road are provided. In particular for the electronic fleet management the determination of the costs arising in connection with using a particular road is a crucial factor since, e.g., the transport costs for the delivery of goods are an important factor for determining the route which a vehicle has to take in order to arrive, e.g., at a customer.

According to the method of the invention it further comprises the determination of different routes on a road map to a predetermined destination, and the determination of the costs arising in connection with selecting each route.

The determination of the costs arising in connection with selecting a determined route may comprise the following steps: In a first step the first costs depending on the travelled distance to said predetermined destination may be determined and/or the second costs depending on the selected route may be determined.

As mentioned above, the first costs may be determined by multiplying the vehicle-inherent costs per distance with the distance of the determined route, and the second costs may comprise the step of summarizing the costs depending on the selected route arising in connection with said selected route, the second costs comprising one of the costs of road toll, costs for vignettes, costs for a ferryboat, tunnel fees, toll per distance, and toll for motor rail stations, etc.

Furthermore, a route to said predetermined destination, which has the lowest costs, by taking into account the first costs and/or the second costs, may be calculated, when different routes to a predetermined destination are possible. With this method the driver of the vehicle can select a route where, e.g., the first costs are minimized or may select another route where the second costs are minimized, or may select a third route where the first and the second costs are taken into account.

According to a further embodiment of the invention data containing user-related information can be taken into account for the calculation of the second costs. These data may contain information whether the user of the navigation device already has means needed for the use of a particular route, so that this information can be taken into consideration for calculating the second costs of the route to the predetermined destination. The above-mentioned means could a vignette or any other permit to use a particular road. If the user of the vehicle already owns a vignette needed for a highway in a certain country, the use of the highway in this country, for which money has normally to be paid, can be used without influencing the second costs. This user-related information could also be stored in the database system and can be input by the user of the vehicle.

The method according to the present invention further comprises the step of determining the route having the lowest costs to said predetermined destination. This step may include the determination of the route to said predetermined destination, having the lowest first costs, or the determination of the route having the lowest second costs or the lowest total costs. If the costs arising in connection with using a particular road are of great importance, the cheapest route can be determined, even if this cheapest route may have longer travel time.

According to the invention, the method further comprises the steps of calculating the fastest route having the shortest travel time to a predetermined destination, and the step of calculating the shortest route to said predetermined destination, having the smallest distance. In a further step the costs for the fastest and for the shortest route are determined. These costs of the different routes can be displayed to the user of the vehicle or to any other person who may be interested in this information, so that the user can decide whether it is necessary to take a short route which may perhaps be less expensive than the fastest route having the shortest travel time. This feature may be of importance for the users of cabs, where the cab driver can tell in advance the costs of a fast or a short route.. Instead of calculating the fastest route and the shortest route and comparing them, two different routes can be calculated which are not necessarily the fastest and the shortest ones. It is also possible to take two different routes A and B nd to compare the costs of these different routes A and B.

The method further comprises the steps of building a ratio of the fastest route to the shortest route, a ratio of the fastest route to the route with the lowest costs, and a ratio of the shortest route to the route with the lowest costs. In the next step an optimal route to a predetermined destination may be determined by taking int account said above determined ratios. These ratios are used to calculate the optimal route, since these ratios help to see whether there exists a short or fast road with minimized costs. These ratios help to avoid the cases, e.g., when one route to a predetermined destination is 1 % cheaper than another route to the same destination, but will take the double travel time. In this case the calculation of the ratio of the fastest route to the route with the lowest costs helps to see whether it is worth to take a longer route which is cheaper, or whether this advantage is overcome because the travel time is, e.g., 50 % longer. So, in the present context, the optimal route is the route which has a short travel time in combination with low costs or may be short and fast and have low costs.

According to the present invention weighting factors may be introduced for the different features of the route which is shortest, fastest, and has the lowest costs, so that the preferences of the user of the vehicle can be taken into account. If the travel time is of more importance than the other two factors, the weighting factor of the travel time can be adjusted accordingly.

As the different roads of the road map are normally divided into different road sections, the above-described calculation of the fastest, shortest, optimal route and of the route with lowest costs may be done for each section of the road. Normally, a route to a predetermined destination is calculated for each nod, the nod connecting two adjacent road sections.

According to a further embodiment of the invention, for the determination of the route to a predetermined destination routes at which second costs arise in connection with using a particular route are avoided. This means that the user can "tell" the navigation device that he/she does not want to pay any kind of toll if possible. In another possibility these routes may even completely be excluded, so that the navigation device only determines routes where second costs do not arise. According to another embodiment of the invention the user can tell the navigation system to determine a route for which the second costs are not higher than a predetermined value which can be determined by the user of the navigation device.

The feature of providing a cost information in a navigation device - this cost information comprising information about the costs arising in connection with selecting a particular road on the map - can also be used for calculating the travel time to a predetermined destination. The travel time may be strongly influenced by the fact that a person uses a road for which second costs arise, as the user may have to buy a vignette or may wait at the toll station for paying the toll. When the database system comprising the cost information delivers the information whether second costs arise, this information can be used for calculating the travel time.

Therefore, the invention relates further to a method for calculating the travel time to a predetermined destination in a navigation device comprising the steps of determining the route to a predetermined destination, calculating the travel time taking into account the distance and the type of road to the predetermined destination. This kind of calculation is known to the person skilled in the art and will not be explained in detail, since the travel time to a certain destination may easily be calculated when it is known that the used type of road is a highway. According to the present invention data containing cost information are provided, said cost information comprising second costs depending on the selected route. In a next step a search may be performed for data provided to the navigation device, said data containing information whether the user of the navigation device already has means needed for the use of a particular route, which influence the second costs to the predetermined destination. In a next step the time arising in connection with the second costs is determined and the overall travel time to the predetermined destination can be calculated as a sum of the pure travel time plus the time arising in connection with the second costs.

According to an embodiment of the invention, for the time arising in connection with the second costs the time is taken into account that is necessary for buying the means, if said means is necessary for the use of said route to the predetermined destination, and if the user of the navigation device does not yet have this means. This time may comprise the time that is needed to buy a vignette, when the vignette is necessary to use the highways of a certain country. This may take several minutes, so that this time may be used for a more precise estimate of the travel time.

For the determination of the time arising in connection with the second costs, it may further be helpful to determine whether the toll for a certain route is paid with a kind of vignette, so that only the time has to be considered which is necessary to buy this vignette, or whether the toll has to be paid at different toll stations, where there it is always possible that the vehicle has to wait for a certain time period in which the sum needed to pass to the tollbooth is paid.

For the determination of the time arising in connection with the second costs it may further be determined whether the user of the navigation device is provided with automatic means that can be used for paying the second costs. When using a particular road for which second costs have to be paid, the time arising in connection with the second costs depends on the provision of an automatic means. If, e.g., there is a transducer installed in the vehicle and if there exists a tollbooth having special lanes for those vehicles which are equipped with this transducer, these vehicles only have to pass the toolbooth at a certain lane. In this system, the tollbooth detects the vehicle and automatically charges the vehicle. These automatic means may strongly influence a time needed to travel on a route where second costs arise, since the use of these automatic means will considerably shorten the time as compared to the time needed by those vehicles which have to stand in line and pay a certain sum at the tollbooth.

### Brief Description of the Drawings

Specific embodiments of the invention will now be described by way of example with respect to the accompanying drawings in which:
Fig. 1 shows a navigation device incorporating features of the present invention;
Fig. 2 shows a method for providing cost information for a navigation device;
Fig. 3 shows a flowchart showing different steps of determining first and second costs;
Fig. 4 shows in further detail the calculation of the first and the second costs;
Fig. 5 shows a flowchart for determining the costs depending on user-related information;
Fig. 6 shows an embodiment for determining the costs, in which second costs are avoided;
Fig. 7 shows an embodiment for determining the optimal route;
Fig. 8 shows a flowchart explaining the calculation of the travel time arising in connection with the second costs; and
Fig. 9 shows an embodiment for the navigation of a vehicle using the provided cost information.

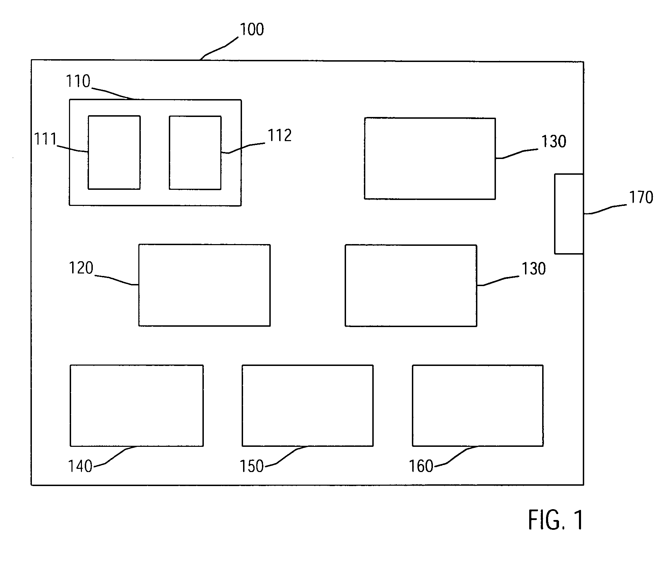

Fig. 1 shows a navigation device 100 according to the present invention. This navigation device may be installed in a vehicle. The navigation device 100 comprises a database system 110 which comprises data containing road map information used for generating a road map for the navigation device. The database system may further comprise many other items of information which can be used in a nowadays navigation system, e.g., information about points of interest (POIs) or any other information. In the present embodiment the data containing road map information are stored in a first database 111 of the database system 110. The data containing road map information can have any kind of format suitable for the generation of a road map. The database system 110 further comprises a second database 112 comprising the cost information. The cost information comprised in the second database 112 may comprise all information about the costs arising in connection with selecting a particular road on the map. The cost information in the second database may comprise first costs depending on the travelled distance and on the used vehicle, such as fuel consumption per kilometer. These first costs can be input into the navigation device by the user of the navigation device via an input unit 120 or these costs may also be calculated by using a calculation unit 130 taking into account, e.g., the fuel consumption of the last several kilometers and/or the geography of the route lying ahead.

The road map information comprised in the first database 111 may comprise a link to the second database for those roads at which costs arise when a particular road is selected. The first database 111 may also have geographical position data for each road or each road section, the second database comprising a cost information and geographical position data in combination with each cost information. It should be understood that there are many possibilities of storing the different data, such as road map data and cost information data. For the present invention it is only necessary that the first and/or the second costs can be determined for a particular road section, when this road section is selected for the determination of a route to a certain destination.

The road map and the different costs arising in connection with using a particular road may be displayed on a display unit 130, so that the user can be informed of the different costs. The navigation device 100 may further comprise a processing unit 140 for processing all the different data, such as road map data. In the case that the navigation device 100 provides different routes to the same destination, the user of the vehicle can use a selecting unit 150 for selecting a particular route to a predetermined destination, be it the shortest route, the cheapest route or the fastest route, as will be explained in detail later on. Furthermore, a comparison unit 160 may be provided for comparing the different costs or the different routes.

The navigation device 100 may further comprise a network interface 170 which will be used for the communication with a remote communication network. This communication network may be a TCP/IP-based network such as the worldwide web. The database system 110 comprising the road map data and the cost information data is not necessarily comprised in the navigation device 100 itself. It is also possible that the database system 110 is provided on a server which is accessible by the navigation device using the network interface 170. Furthermore, the other units described above need not be provided on a single one-piece device. The different units could be part of different devices or computer systems.

It should be understood that the navigation device 100 will comprise many other features known from nowadays navigation devices which are known in the art. For the sake of clarity, however, only the components needed in connection with the invention are described.

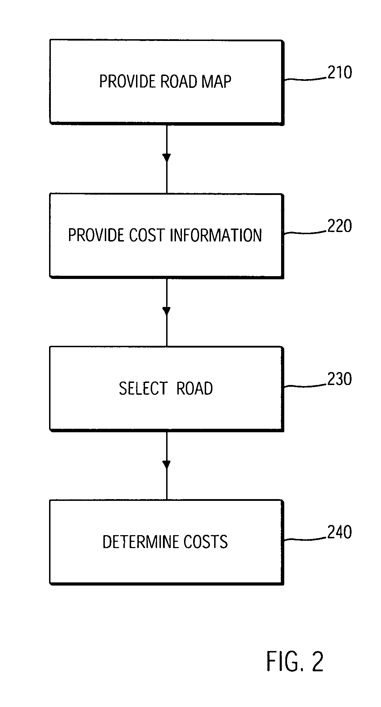

In Fig. 2 a method for providing the cost information for the navigation device 100 is shown. In a first step 210 the data are provided which contain road map information for generating a road map. These road map data may be stored in the database system 110 of the navigation device 100. In the next step 220 data are provided which contain information about the costs, this cost information also being stored in the database system 110. Furthermore, a particular road of the map is selected (step 230). This particular road could be a part of a route to a predetermined destination. Last, but not least, the costs are determined in step 240, which arise in connection with the use of said particular road of the map. Due to this method the driver of the vehicle comprising the navigation system has further information which can be taken into account for determining or selecting a route to a destination.

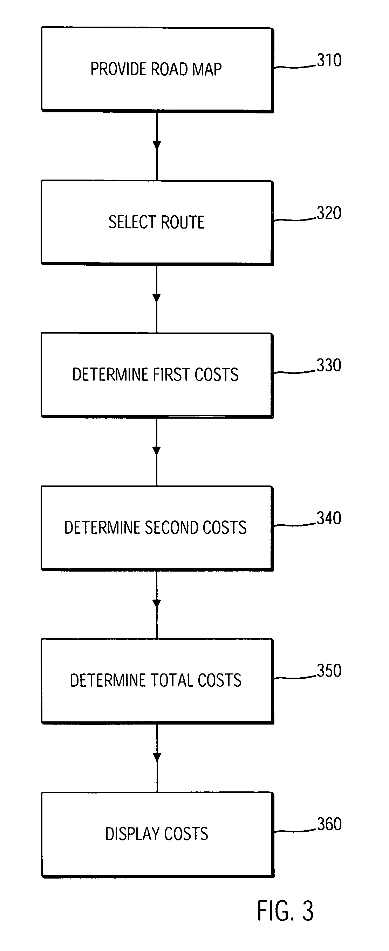

In Fig. 3 the different steps shown in Fig. 2 are shown in more detail. Just as in Fig. 2 the road map information is provided for generating a road map for the navigation device (step 310). In the next step the user selects a route to a predetermined destination (step 320) by using the selected unit 150. The navigation device may have proposed different routes to said predetermined destination, so that the user may have to determine a route. By using said selected route the first costs can be determined in step 330. Furthermore, in the next step the second costs are determined for using said selected route (step 340). The first costs mainly depend on the travelled distance of the selected route and the second costs mainly depend on the selected route comprising the costs for road toll, costs for vignettes, costs for a ferryboat, tunnel fees, toll per distance, and/or toll for motor rail trains.

In step 350 the total costs may be determined by summarizing the first and the second costs. In the last step the different costs comprising the first, the second and/or the total costs are displayed on the display unit 130, so that the user of the vehicle is informed of the different costs. It should be understood that these costs could also be transmitted to a remote server or host computer via the network interface 170. In this case the different costs are transmitted to a third person who may be responsible for the decision what kind of route the vehicle has to take, as it is the case for a fleet management.

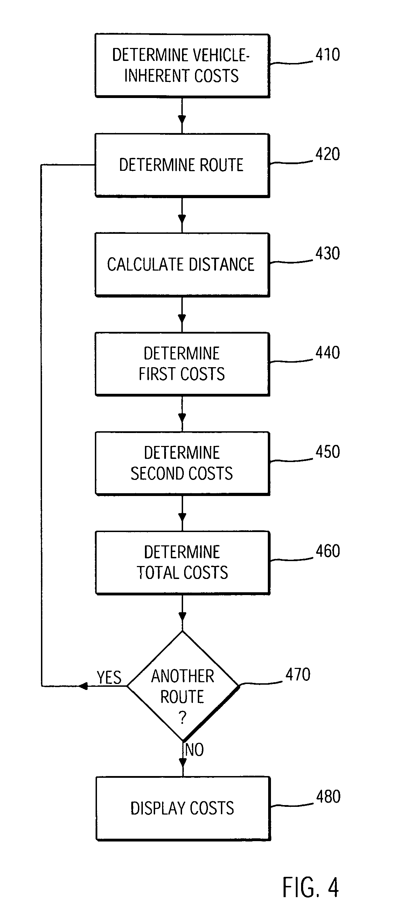

In Fig. 4 the determination of the first and second costs is shown in further detail, when different routes are proposed. For the determination of the first costs the vehicle-inherent costs are determined in step 410. These vehicle-inherent costs may be input into the navigation device 100 by its user or may already be stored in the database system 110, or may be determined by taking into account, e.g., the last 100 kilometers. They may also be determined by considering the geography of the route lying ahead. In step 420 the route to a predetermined destination is determined for the calculation of the first costs. The distance to that predetermined destination using the route determined in step 420 has to be calculated (step 430). In step 440 the first costs are determined by multiplying the vehicle-inherent costs per distance with the distance calculated in step 430. In the next step it is determined whether second costs depending on the selected route arise in connection with using said route (step 450). If this is the case, the second costs due to road toll or vignettes or any other extras costs are summed up, so that in step 460 the total costs can be determined. In step 470 it is shown whether another route to said predetermined destination should be determined. If this is the case, another route is determined in step 420 and the costs for this other route can be determined through the step 430 to 460. If no other route is determined, the different costs for the route or the plurality of routes are displayed in step 480.

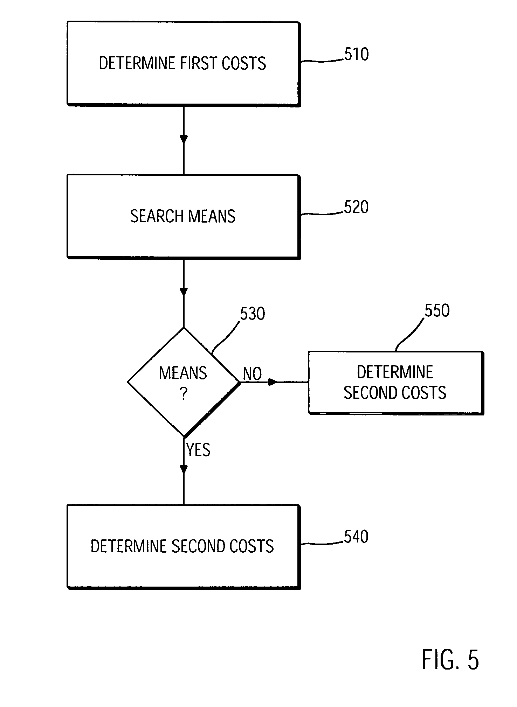

In Fig. 5 another embodiment of the present invention is shown. In this embodiment data containing user-related information are taken into account for the determination of the second costs. For the determination of the total costs, the first costs are determined in step 510 as described in connection with Fig. 4. In the next step 520 a search is performed for data containing user-related information, said data containing information whether the use of the navigation device already has means needed for the use of a particular route, so that this information about the means can be taken into consideration for calculating the second costs. This means may be a vignette the owner of the vehicle already owns, so that this vignette has not to be paid any more when a road is used for which this vignette is necessary. This means could also be an automatic means such as a transponder which helps to automatically charge the owner of a vehicle when the vehicle of the owner is passing a tollbooth. The means in the present context may comprise any device which helps to avoid extra costs which normally have to be paid when using a particular road, but which do not have to be paid, when said device is provided on the vehicle.

In step 530 the decision is taken whether any means have been found in the search of step 520. If the search was positive, i.e. the user of the vehicle already owns the means needed for the use of a particular road, the second costs are determined in step 540. If no means have been found, the second costs are also determined in step 550, but the second costs determined in step 550 will probably differ from the costs determined in step 540, sine the second costs determined in step 550 comprise the costs for buying the means, e.g., the vignette needed to use a particular road which the user wants to take to a predetermined destination. With this embodiment the different conditions for different vehicles or different users can be taken into account for the determination of the second costs. This is of great advantage as the user can use toll roads, which are normally faster than other roads, in order to arrive earlier at a predetermined destination, as it would be the case if, for the determination of the second costs, the means that the user of the vehicle has, were not taken into account.

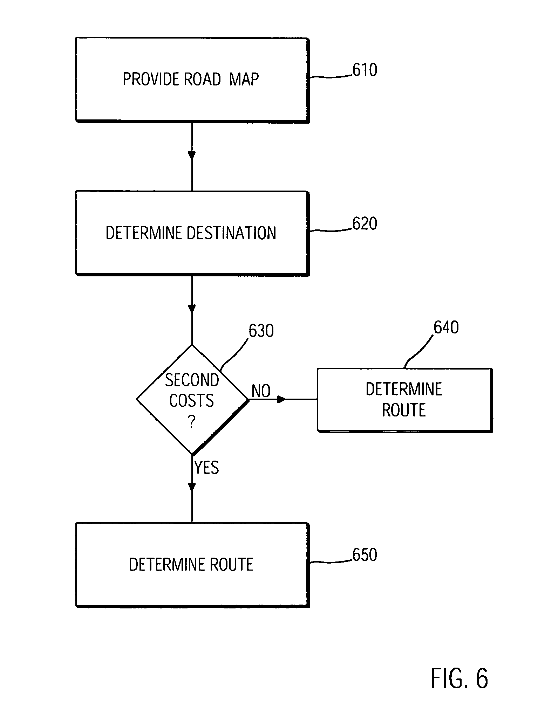

In Fig. 6 an embodiment is shown in which the user can determine whether or not routes where second costs arise should be used or not. It may be the case that the user of the vehicle does not care about the first costs, since he/she does not pay for the fuel or if he/she does not own the used vehicle. The user is only interested in avoiding second costs. In step 610 the road map information is provided which is used for generating a road map for the navigation device. In the next step 620 the destination is determined at which the user wants to arrive. In the next step 630 it is asked whether the user of the vehicle wants to use routes, for the use of which there arise costs, when said particular route is selected. If the user of the navigation device has decided that he wants to avoid or even eclude routes comprising second costs, a route is determined which has no road sections where no costs arising in connection with selecting said particular road section (step 640). If the user has determined that second costs are possible which arise in connection with selecting a particular road section, the route is determined taking into account this information (step 650). It should be clear that the determined routes at steps 640 or 650 may differ, depending on the fact whether the route to the predetermined destination comprises a section where second costs arise. For the determination of the second costs, the steps shown in Fig. 5 could also be incorporated.

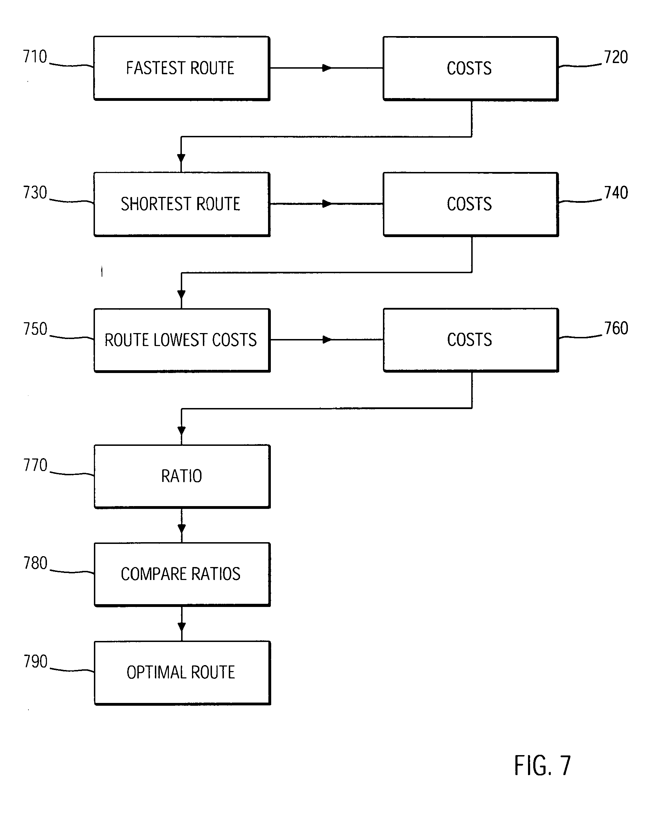

In Fig. 7 another embodiment of the present invention is shown. In this embodiment an optimal route to a predetermined destination can be calculated. As can be seen from Fig. 7 in the first step 710 the fastest route to the destination chosen by the user of the vehicle is determined. In the next step 720 the costs of the fastest route are determined, these costs being the first costs, the second costs, or the total costs, as described in connection with Figure 3 and 4. In the next step the shortest route is determined in step 730 by using the distance as a parameter for determining the route. In step 740 the costs arising in connection with using the shortest route are determined. In the next step 750 the route having the lowest costs is determined, the costs of the corresponding route being determined in step 760. The calculations carried out above are well known to the person skilled in the art, so that a detailed description is omitted. In the next step 770 different ratios are calculated. The ratios calculated in step 770 may be a ratio of the fastest route to the shortest route, a ratio of the fastest route to the route with the lowest costs, and a ratio of the shortest route to the route with the lowest costs. Furthermore, ratios of the different costs of the route which is fastest, shortest, and has the lowest costs are generated. In step 780 these different ratios are compared to each other. Due to this comparison of the different ratios the optimal route can be determined. This procedure may be shown by way of an example. The fastest route to a predetermined destination may be one 1 hour and may cost a certain sum. The shortest route having the smallest distance to the predetermined destination may take longer, but may be less expensive than a highway causing second costs. Furthermore there may be a route having the lowest costs, which is 10 % cheaper than the fastest route, but which will take 2 hours. This example shows that it will be better to choose the fastest route which is 10 % more expensive than the route having the lowest costs, as the travel time for the route having the lowest costs is twice the travel time of the fastest route. Therefore an optimal route can be calculated while comparing the different ratios based on the fastest route, the shortest route and the route with the lowest costs and on the ratios generated by the costs of each route.

It should be understood that the different factors, be it fastest route, shortest route or the route with the lowest costs, may have different weighting factors, so that the user of the navigation device can decide whether one factor is more important for the determination of the optimal route than are other factors. The embodiment shown in Fig. 7 can be used for travelling salesmen. If a salesman has appointments at different locations at different points of time, he can optimize the route from one destination to the other depending on the time he wants to spend between the different appointments. This method for calculating the optimal route could also be used for the management of a just-in-time delivery, in the case where the user of a vehicle wants to deliver goods to a customer. The user of this method may, e.g., know that the transported goods have to be at the customer at a certain point of time. Using this knowledge he can now optimize the route, so that a route having the lowest costs is used, as the transportation costs, e.g., in a cost-sensitive industry as, e.g., the automobile industry, is an important factor for determining whether a competitive price can be achieved.

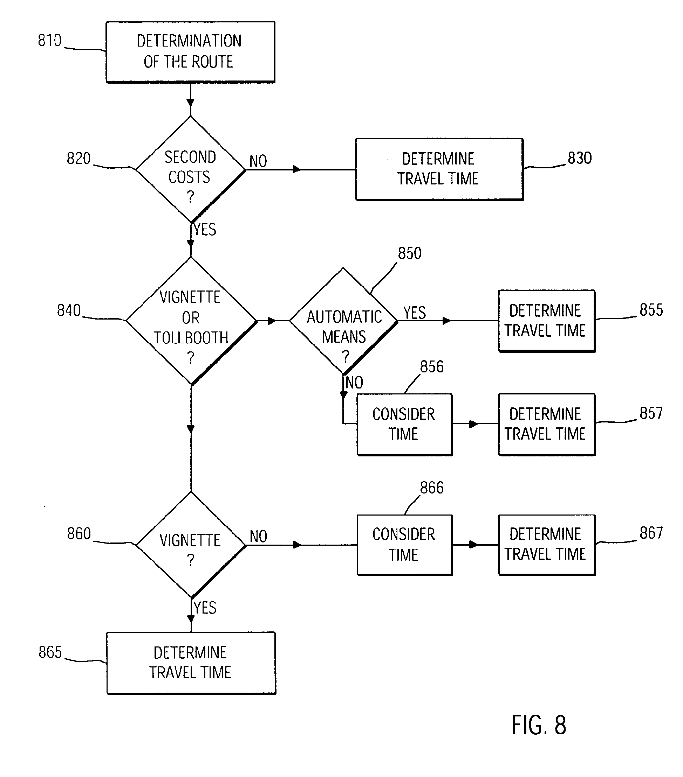

In Fig. 8 a method for using cost information provided by the navigation system is shown. For the determination of the travel time the time arising in connection with the second costs is an important factor. This phenomenon is explained in more detail below: In a first step the route to a predetermined destination is determined in step 810. In the next step 820 it is considered whether second costs arise in connection with the determination of the route in step 810. If no second costs arise in connection with selecting said particular route, the travel time can be determined as it is known to the person skilled in the art considering the distance and the type of roads used for reaching the predetermined destination. It should be understood that for the determination of the travel time traffic messages sent to the navigation device can be taken into account as it is known to the person skilled in the art (step 830). If seconds costs arise in connection with using said particular route it is determined in step 840 whether the second costs arise due to the fact that for the use of a particular road a vignette system or a tollbooth system has to be used. If a tollbooth system is used on a section of the route, in step 850 it is asked whether the navigation device is provided with automatic means that can be used for paying the second costs when using a particular road. This automatic means could be a transponder which may be used at tollbooths which are equipped with transponder systems. In these systems the user of the vehicle has a transponder which makes it possible to determine the identity of the used vehicle. When this vehicle with its specific transponder is passing a tollbooth, the transponder system installed at the tollbooth will received the signal of the transponder installed in the vehicle with its identification number and will charge the owner of the vehicle for the fact that he has used said particular road section for which second costs arise.

In the next step 855 the travel time can be determined by taking into account that the user of the vehicle needs less time to pass the tollbooth than other users having no automatic means, who normally have to wait in order to pay a certain sum for the use of this road section. If the user of the vehicle does not have an automatic means, the time spent at the tollbooth waiting for paying the toll has to be considered in step 856, and the travel time can be determined in step 857. It should be clear that the time determined in step 857 should be larger than the travel time determined in step 855, as the provision of the automatic means, e.g. a transpoder, shortens the time needed to pass a tollbooth. It should be understood that other means than transponder systems can be used. It is also possible to use video toll systems, where the license plate of the vehicle is registered and the owner of the vehicle is charged when using said route.

If it is determined in step 840 that a vignette system is used for a section of the route determined in step 810, it is asked whether the user of the vehicle already has the vignette needed for the use of this section of the road (step 860). If this is the case, the travel time can be determined in step 865 by taking into consideration that no time is needed for buying a vignette. If the user of the vehicles does not have the needed vignette, additional time has to be taken into account in step 866, which is necessary to stop the vehicle and to buy the vignette. Considering this additional time the travel time can be determined in step 867 by taking into account additional time needed at step 866. It should be clear that the determined travel time at step 865 should be smaller than the determined travel time at step 867. With the method shown in Fig. 8 the estimation of the travel time which is needed to arrive at a certain destination can be optimized, as the time arising in connection with the second costs is taken into account.

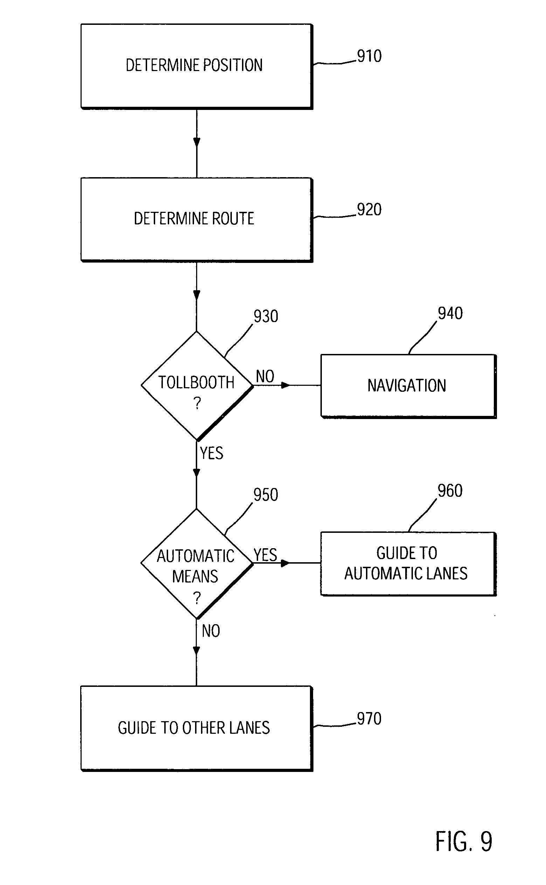

In Fig. 9 it is shown that the cost information given to the driver of the vehicle can also be used for the navigation of the vehicle. In step 910 the position of the vehicle is determined by using the navigation device of the vehicle. The position may be determined by using a GPS system or using any other system which is able to calculate the position of a vehicle. In the next step 920, the route to a predetermined destination is determined, so that the user of the navigation device can be guided to his destination. In the next step 930 it is determined whether a tollbooth system is used on any section of the route to the predetermined destination. If this is not the case, the navigation is continued as usual (step 940) and no special advice is given to the driver. If a tollbooth system is detected in step 930 it is asked whether the user of the vehicle has the automatic means which can be used at certain tollbooths. If this is the case, the tollbooth may certainly have lanes reserved for the vehicles having these automatic means, so that the navigation device will guide the user of the vehicle to the lanes that are equipped with this automatic toll system (step 960). If the user of the vehicle does not have the automatic means, the navigation device will guide the vehicle to the other lanes, where the user has to pay a certain sum for passing the tollbooth.

In conclusion, the fact of providing data containing cost information to a navigation device leads to a large variety of applications which improve the use of the navigation device. By using the cost information optimal routes in combination with short or fast routes may be determined. Furthermore, the different costs arising in connection with using a particular road can be determined, or the cost information can be used to optimize the predicted travel time.

## Claims

1. Navigation device (100) comprising
- a data base system (110) comprising data which contain road map information used for generating a road map for the navigation device,
- a processing unit (140) for processing the data containing road map information,
- a selecting unit (150) for selecting a particular road on the map, wherein the data base system (110) further comprises data containing monetary cost information, the cost information comprising information about the costs arising in connection with selecting said particular road on the map, **characterized by** a calculation unit (130) calculating different routes to said predetermined destination and determining the costs arising in connection with using each route,
wherein the calculation unit calculates the route having the lowest costs to said destination, the fastest route having the shortest travel time to said predetermined destination, the shortest route to said predetermined destination, the costs of the fastest and the shortest route,
wherein the calculation unit generates a ratio of the travel times of the fastest route to the shortest route, a ratio of the travel times of the fastest route to the route with the lowest costs, and a ratio of the travel times of the shortest route to the route with the lowest costs, and ratios of the different costs,
and selects one of the calculated routes as the optimal route to said predetermined destination by taking into account said above determined ratios.

2. Navigation device (100) according to claim 1, **characterized in that** the data comprising road map information is represented as a series of road sections, information about the costs arising in connection with selecting a particular road section of the map being linked to a particular road section.

3. Navigation device (100) according to claim 1 or 2, **characterized in that** the data base system (110) comprises a first data base (111) comprising the data containing the road map information.

4. Navigation device (100) according to claim 2 and 3, **characterized in that** the first data base (111) comprises said road map information represented as a series of road sections and the cost information, each item of cost information being linked to a particular road section.

5. Navigation device (100) according to any of claims 1 to 3, **characterized in that** the data base system (110) comprises a second data base (112) which comprises the data containing the cost information.

6. Navigation device (100) according to claim 2 and 5, **characterized in that** the first data base (111) comprises said road map information represented as a series of road sections, and geographical position data for each road section, whereas the second data base (112) comprises the data containing the cost information, each item of cost information being linked to at least one geographical position data.

7. Navigation device (100) according to any of the preceding claims, **characterized in that** the cost information comprises first costs, depending only on the traveled distance and/or second costs depending on the selected route that have to be paid when a particular road is used.

8. Navigation device (100) according to claim 7, **characterized in that** the first costs comprise the costs depending on the traveled distance and on the used vehicle, such as fuel consumption,
wherein the second costs depending on the selected route comprise one of the costs of road toll, costs for vignettes, costs for a ferry boat, tunnel fees, toll per distance, toll for motor rail trains.

9. Navigation device (100) according to any of the preceding claims, **characterized by** further comprising a network interface (170) for communication with a communication network, on which the data base system is accessible.

10. Navigation device (100) according to any of claims 7 to 9, **characterized by** further comprising an input unit (120) for inputting data which contain user related information, which influence the calculation of the second costs to said predetermined destination.

11. Navigation device (100) according to any of the preceding claims, **characterized by** further comprising a comparison unit (160), which compares the different costs for the different routes, and a display unit for displaying these costs.

12. Navigation device (100) according to any of claims 9 to 11, **characterized in that** the communication network is a WAN (Wide Area Network) or WLAN (Wireless Local Area Network) based communication network.

13. Method for providing cost information in a navigation device, comprising the following steps:
- providing data which contain road map information for generating a road map,
- selecting a particular road of the map,
- providing data which contain monetary cost information, the cost information comprising information about the costs arising in connection with selecting said particular road on the map, further comprising the determination of different routes on the road map to a predetermined destination, and the determination of the costs arising in connection with selecting each route,
further comprising the steps of
- determining the route having the lowest costs to said predetermined destination,
- calculating the fastest route having the shortest travel time to said predetermined destination,
- calculating the shortest route to said predetermined destination,
- determining the costs of the fastest and the shortest route,
- generating a ratio of the travel times of the fastest route to the shortest route, a ratio of the travel times of the fastest route to the route with the lowest costs, and a ratio of the travel times of the shortest route to the route with the lowest costs, and ratios of the different costs, and
- selecting one of the calculated routes as the optimal route to said predetermined destination by taking into account said above determined ratios.

14. Method according to claim 13, wherein the step of determining the costs arising in connection with selecting a determined route comprises the steps of:
- determining first costs, depending on the traveled distance to said predetermined destination, and/or
- determining second costs depending on the selected route.

15. Method according to claim 14, wherein the determination of the first costs comprises the step of
- determining a predetermined value of vehicle inherent costs per distance depending on the used vehicle type, and
- calculating the first costs by multiplying the vehicle inherent costs per distance with the distance of the determined route.

16. Method according to claim 15, wherein the determination of the second costs comprises the step of summarizing the costs depending on the selected route, which arise in connection with using said selected route, the second costs comprising one of the costs of road toll, costs for vignettes, costs for a ferry boat, tunnel fees, toll per distance, toll for motor rail stations.

17. Method according to any of claims 14 to 16, comprising the step of calculating a route with the lowest costs to said predetermined destination taking into account the first costs and/or the second costs.

18. Method according to claim 14 or 17, **characterized in that** for the calculation of the second costs, data containing user related information are taken into account, said data containing information whether the user of the navigation device already has means needed for the use of a particular route, so that this information can be taken in consideration for calculating the second costs of the route to the predetermined destination.

19. Method according to claim 18, wherein the means needed for the use of a particular route comprises vignettes.

20. Method according to any of claims 13 to 19, further comprising the step of calculating the travel time to the predetermined destination.

21. Method according to claim 20, wherein the data containing user related information are taken into account for the calculation of the travel time, the travel time depending on the fact whether the user of a particular road has means needed for the use of said particular road, or on the fact what kind of means the user owns.

22. Method according to claim 13, wherein the calculation of the route which is fastest, shortest, optimal, and has the lowest costs is done for each section of the road, the road map being divided into different road sections.

23. Method according to any of claims 13 to 22, wherein weighting factors are introduced for the route which is shortest, fastest and has the lowest costs, which are used for the calculation of the optimal route.

24. Method according to any of claims 13 to 19, wherein for the determination of the route to a predetermined destination, routes at which second costs arise in connection with using a particular route are avoided or excluded.

## Patentansprüche

1. Navigationsvorrichtung (100), umfassend
- ein Datenbanksystem (110), das Daten umfasst, die Straßenkarteninformationen zum Erzeugen einer Straßenkarte für die Navigationsvorrichtung enthalten,
- eine Verarbeitungseinheit (140) zum Verarbeiten der Daten, die Straßenkarteninformationen enthalten,
- eine Auswahleinheit (150) zum Auswählen einer bestimmten Straße auf der Karte, wobei das Datenbanksystem (110) ferner Daten umfasst, die finanzielle Kosteninformationen enthalten, wobei die Kosteninformationen Informationen zu den Kosten umfassen, die im Zusammenhang mit dem Auswählen der jeweiligen Straße auf der Karte entstehen, **gekennzeichnet durch**
eine Berechnungseinheit (130), die verschiedene Routen zu dem vorgegebenen Zielort berechnet und die Kosten bestimmt, die im Zusammenhang mit der Nutzung der einzelnen Routen entstehen, wobei die Berechnungseinheit die Route mit den niedrigsten Kosten zu dem Zielort, die schnellste Route mit der kürzesten Fahrzeit zu dem vorgegebenen Zielort, die kürzeste Route zu dem vorgegebenen Zielort,
die Kosten der schnellsten und der kürzesten Route berechnet,
wobei die Berechnungseinheit ein Verhältnis der Fahrzeiten der schnellsten Route zur kürzesten Route, ein Verhältnis der Fahrzeiten der schnellsten Route zur Route mit den niedrigsten Kosten und ein Verhältnis der Fahrzeiten der kürzesten Route zur Route mit den niedrigsten Kosten und Verhältnisse der verschiedenen Kosten erzeugt und eine der berechneten Routen als die optimale Route zu dem vorgegebenen Zielort auswählt, indem sie die bestimmten Verhältnisse berücksichtigt.

2. Navigationsvorrichtung (100) nach Anspruch 1, **dadurch gekennzeichnet, dass** die Daten, die Straßenkarteninformationen umfassen, als eine Serie von Straßenabschnitten dargestellt sind, wobei Informationen zu den Kosten, die im Zusammenhang mit der Auswahl eines jeweiligen Straßenabschnitts der Karte entstehen, mit einem jeweiligen Straßenabschnitt verknüpft sind.

3. Navigationsvorrichtung (100) nach Anspruch 1 oder 2, **dadurch gekennzeichnet, dass** das Datenbanksystem (110) eine erste Datenbank (111) umfasst, die die Daten umfasst, welche die Straßenkarteninformationen enthalten.

4. Navigationsvorrichtung (100) nach Anspruch 2 und 3, **dadurch gekennzeichnet, dass** die erste Datenbank (111) die Straßenkarteninformationen, die als eine Serie von Straßenabschnitten dargestellt sind, und die Kosteninformationen umfasst, wobei jedes Element der Kosteninformationen mit einem jeweiligen Straßenabschnitt verknüpft ist.

5. Navigationsvorrichtung (100) nach einem der Ansprüche 1 bis 3, **dadurch gekennzeichnet, dass** die Datenbanksystem (110) eine zweite Datenbank (112) umfasst, die die Daten umfasst, welche die Kosteninformationen enthalten.

6. Navigationsvorrichtung (100) nach Anspruch 2 und 5, **dadurch gekennzeichnet, dass** die erste Datenbank (111) die Straßenkarteninformationen, die als eine Serie von Straßenabschnitten dargestellt sind, und geografische Positionsdaten für jeden Straßenabschnitt umfasst, während die zweite Datenbank (112) Daten umfasst, die die Kosteninformationen enthalten, wobei jedes Element der Kosteninformationen mit wenigstens einem Satz von geografischen Positionsdaten verknüpft ist.

7. Navigationsvorrichtung (100) nach einem der vorangehenden Ansprüche, **dadurch gekennzeichnet, dass** die Kosteninformationen erste Kosten, die nur von der gefahrenen Strecke abhängen, und/oder zweite Kosten umfasst, die von der ausgewählten Route abhängen und gezahlt werden müssen, wenn eine bestimmte Straße benutzt wird.

8. Navigationsvorrichtung (100) nach Anspruch 7, **dadurch gekennzeichnet, dass** die ersten Kosten die Kosten umfassen, die von der gefahrenen Strecke und vom verwendeten Fahrzeug abhängen, wie etwa Kraftstoffverbrauch,
wobei die zweite Kosten, die von der ausgewählten Route abhängen, eine von den Kosten für Mautgebühren, Kosten für Vignetten, Kosten für eine Fähre, Tunnelgebühren, streckenabhängige Maut und Gebühren für Triebwagenzüge umfassen.

9. Navigationsvorrichtung (100) nach einem der vorangehenden Ansprüche, **dadurch gekennzeichnet, dass** sie ferner eine Netzschnittstelle (170) zur Kommunikation mit einem Kommunikationsnetz umfasst, auf dem das Datenbanksystem zugänglich ist.

10. Navigationsvorrichtung (100) nach einem der Ansprüche 7 bis 9, **dadurch gekennzeichnet, dass** sie ferner eine Eingabeeinheit (120) zum Eingeben von Daten umfasst, die benutzerbezogene Informationen enthalten, die die Berechnung der zweite Kosten zu dem vorgegebenen Zielort beeinflussen.

11. Navigationsvorrichtung (100) nach einem der vorangehenden Ansprüche, **dadurch gekennzeichnet, dass** sie ferner eine Vergleichseinheit (160) umfasst, die die verschiedenen Kosten für die verschiedenen Routen vergleicht, und eine Anzeigeeinheit zum Anzeigen dieser Kosten.

12. Navigationsvorrichtung (100) nach einem der Ansprüche 9 bis 11, **dadurch gekennzeichnet, dass** das Kommunikationsnetz ein auf WAN (Fernnetz) oder WLAN (drahtloses lokales Netz) basiertes Kommunikationsnetz ist.

13. Verfahren zum Bereitstellen von Kosteninformationen in einer Navigationsvorrichtung, folgende Schritte umfassend:
- Bereitstellen von Daten, die Straßenkarteninformationen zum Erzeugen einer Straßenkarte enthalten,
- Auswählen einer jeweiligen Straße auf der Karte,
- Bereitstellen von Daten, die finanzielle Kosteninformationen enthalten, wobei die Kosteninformationen Informationen zu den Kosten enthalten, die im Zusammenhang mit der Auswahl der jeweiligen Straße auf der Karte entstehen,
ferner umfassend das Bestimmen verschiedener Routen auf der Straßenkarte zu einem vorgegebenen Zielort, und das Bestimmen der Kosten, die im Zusammenhang mit der Auswahl der jeweiligen Route entstehen, ferner folgende Schritte umfassend
- Bestimmen der Route mit den niedrigsten Kosten zu dem vorgegebenen Zielort,
- Berechnen der schnellsten Route mit der kürzesten Fahrzeit zu dem vorgegebenen Zielort,
- Berechnen der kürzesten Route zu dem vorgegebenen Zielort,
- Bestimmen der Kosten der schnellsten und der kürzesten Route,
- Erzeugen eines Verhältnisses der Fahrzeiten der schnellsten Route zur kürzesten Route, eines Verhältnisses der Fahrzeiten der schnellsten Route zur Route mit den niedrigsten Kosten und eines Verhältnisses der Fahrzeiten der kürzesten Route zur Route mit den niedrigsten Kosten und von Verhältnissen der verschiedenen Kosten, und
- Auswählen einer der berechneten Routen als die optimale Route zu dem vorgegebenen Zielort, indem die bestimmten Verhältnisse berücksichtigt werden.

14. Verfahren nach Anspruch 13, wobei der Schritt des Bestimmens der Kosten, die im Zusammenhang mit der Auswahl einer bestimmten Route entstehen, folgende Schritte umfasst:
- Bestimmen erster Kosten abhängig von der gefahrenen Strecke zu dem vorgegebenen Zielort und/oder
- Bestimmen zweiter Kosten abhängig von der ausgewählten Route.

15. Verfahren nach Anspruch 14, wobei das Bestimmen der ersten Kosten folgende Schritte umfasst
- Bestimmen eines vorgegebenen Werts von fahrzeuginhärenten Kosten pro Strecke abhängig vom verwendeten Fahrzeugtyp, und
- Berechnen der ersten Kosten durch Multiplizieren der fahrzeuginhärenten Kosten pro Strecke mit der Strecke der bestimmten Route.

16. Verfahren nach Anspruch 15, wobei das Bestimmen der zweiten Kosten den Schritt des Summierens der Kosten abhängig von der ausgewählten Route umfasst, die im Zusammenhang mit der Benutzung der ausgewählten Route entstehen, wobei die zweiten Kosten eine von den Kosten für Mautgebühren, Kosten für Vignetten, Kosten für eine Fähre, Tunnelgebühren, streckenabhängige Maut und Gebühren für Triebwagenbahnhöfe umfassen.

17. Verfahren nach einem der Ansprüche 14 bis 16, umfassend den Schritt des Berechnens einer Route mit den niedrigsten Kosten zu dem vorgegebenen Zielort unter Berücksichtigung der ersten Kosten und/oder der zweiten Kosten.

18. Verfahren nach einem der Ansprüche 14 oder 17, **dadurch gekennzeichnet, dass** zur Berechnung der zweiten Kosten Daten, die benutzerbezogene Informationen enthalten, berücksichtigt werden, wobei die Daten Informationen dazu enthalten, ob der Benutzer der Navigationsvorrichtung bereits über das Mittel verfügt, das zur Benutzung einer jeweiligen Route notwendig ist, damit diese Informationen beim Berechnen der zweiten Kosten der Route zu dem vorgegebenen Zielort berücksichtigt werden können.

19. Verfahren nach Anspruch 18, wobei das Mittel, die zur Benutzung einer jeweiligen Route notwendig ist, Vignetten umfasst.

20. Verfahren nach einem der Ansprüche 13 bis 19, ferner umfassend den Schritt des Berechnens der Fahrzeit bis zu dem vorgegebenen Zielort.

21. Verfahren nach Anspruch 20, wobei die Daten, die benutzerbezogene Informationen enthalten, bei der Berechnung der Fahrzeit berücksichtigt werden, wobei die Fahrzeit davon abhängt, ob der Benutzer einer jeweiligen Straße über das Mittel verfügt, das zur Benutzung einer jeweiligen Route notwendig ist, oder davon, welche Art von Mittel der Benutzer besitzt.

22. Verfahren nach Anspruch 13, wobei die Berechnung der Route, die am schnellsten, kürzesten und optimal ist und die niedrigsten Kosten aufweist, für jeden Straßenabschnitt erfolgt, wobei die Straßenkarte in unterschiedliche Straßenabschnitte unterteilt ist.

23. Verfahren nach einem der Ansprüche 13 bis 22, wobei Gewichtungsfaktoren für die Route, die die kürzeste und schnellste ist und die niedrigsten Kosten aufweist, einbezogen werden und zur Berechnung der optimalen Route benutzt werden.

24. Verfahren nach einem der Ansprüche 13 bis 19, wobei für die Bestimmung der Route zu einem vorgegebenen Zielort Routen vermieden oder ausgeschlossen werden, auf denen zweite Kosten in Verbindung mit der Benutzung einer jeweiligen Route entstehen, die zu vermeiden oder auszuschließen ist.

## Revendications

1. Dispositif de navigation (100) comprenant
- un système de base de données (110) comprenant des données qui contiennent des informations relatives à une carte routière utilisées pour produire une carte routière pour le dispositif de navigation,
- une unité de traitement (140) servant à traiter les données contenant les informations relatives à une carte routière,
- une unité de sélection (150) permettant de sélectionner un itinéraire particulier sur la carte, le système de base de données (110) comprenant en outre des données contenant des informations relatives aux coûts monétaires, les informations relatives aux coûts comprenant des informations relatives aux coûts liés au choix dudit itinéraire particulier sur la carte, **caractérisée par** une unité de calcul (130) calculant différents itinéraires jusqu'à ladite destination prédéterminée et déterminant les coûts liés à l'emprunt de chaque itinéraire,
l'unité de calcul calculant l'itinéraire induisant les moindres coûts jusqu'à ladite destination, l'itinéraire le plus rapide induisant le temps de parcours le plus court jusqu'à ladite destination prédéterminée, l'itinéraire le plus court jusqu'à ladite destination prédéterminée, les coûts de l'itinéraire le plus rapide et le plus court,
l'unité de calcul produisant un rapport des temps de parcours de l'itinéraire le plus rapide à l'itinéraire le plus court, un rapport des temps de parcours de l'itinéraire le plus rapide à l'itinéraire à moindres coûts et un rapport des temps de parcours de l'itinéraire le plus court à l'itinéraire aux moindres coûts, et les rapports des différents coûts, et choisissant l'un des itinéraires calculés comme l'itinéraire optimal jusqu'à ladite destination prédéterminée par prise en compte desdits rapport déterminés précédemment.

2. Dispositif de navigation (100) selon la revendication 1, **caractérisé en ce que** les données contenant des informations relatives à une carte routière sont représentées sous la forme d'une série de sections de routes, les informations concernant les coûts liés au choix d'une section particulière de route de la carte étant liées à une section particulière de route.

3. Dispositif de navigation (100) selon la revendication 1 ou 2, **caractérisé en ce que** le système de base de données (110) comprend une première base de données (111) comprenant les données contenant les informations relatives à la route.

4. Dispositif de navigation (100) selon la revendication 2 et 3, **caractérisé en ce que** la première base de données (111) comprend lesdites informations relatives à une carte routière représentées sous la forme d'une série de sections de route, et les informations relatives aux coûts, chaque article des informations relatives aux coûts étant lié à une section particulière de route.

5. Dispositif de navigation (100) selon l'une quelconque des revendications 1 à 3, **caractérisé en ce que** le système de base de données (110) comprend une deuxième base de données (112) qui comprend les données contenant les informations relatives aux coûts.

6. Dispositif de navigation (100) selon la revendication 2 et 5, **caractérisé en ce que** la première base de données (111) comprend des informations relatives à une carte routière représentées sous la forme d'une série de sections de route, et des données relatives à la position géographique pour chaque section de route, alors que la deuxième base de données (112) comprend les données contenant les informations relatives aux coûts, chaque article des informations relatives aux coûts étant lié à au moins une donnée de position géographique.

7. Dispositif de navigation (100) selon l'une quelconque des revendications précédentes, **caractérisé en ce que** les informations relatives aux coûts comprennent de premiers coûts, en fonction uniquement de la distance parcourue et/ou des deuxièmes coûts, en fonction de l'itinéraire choisi qu'il faut payer lorsqu'une route particulière est empruntée.

8. Dispositif de navigation (100) selon la revendication 7, **caractérisé en ce que** les premiers coûts comprennent les coûts dépendant de la distance parcourue et sur le véhicule utilisé, tels que la consommation d'essence, les deuxièmes coûts dépendant de l'itinéraire choisi comprenant soit les coûts de péage, soit les coûts de vignettes, soit les coûts de bac, soit les taxes de tunnel, soit les péages selon distance, soit les péages pour transport ferroviaire de voitures.

9. Dispositif de navigation (100) selon l'une quelconque des revendications précédentes, **caractérisé par** le fait de comprendre en outre une interface de réseau (170) pour une communication avec un réseau de télécommunication, sur lequel le système de base de données est accessible.

10. Dispositif de navigation (100) selon l'une quelconque des revendication 7 à 9, **caractérisé par** le fait de comprendre en outre une unité d'entrée (120) servant à entrer des données qui contiennent des informations relatives à l'utilisateur, qui influencent le calcul des deuxièmes coûts jusqu'à ladite destination prédéterminée.

11. Dispositif de navigation (100) selon l'une quelconque des revendications précédentes, **caractérisé par** le fait de comprendre en outre une unité de comparaison (160) qui compare les différents coûts pour les différents itinéraires, et une unité d'affichage servant à afficher ces coûts.

12. Dispositif de navigation (100) selon l'une quelconque des revendications 9 à 11, **caractérisé en ce que** le réseau de télécommunication est un WAN (réseau de zone étendue) ou un WLAN (réseau sans fil de zone locale) en fonction du réseau de télécommunication.

13. Procédé d'obtention d'informations relatives aux coûts dans un dispositif de navigation, comprenant les étapes suivantes :
- l'obtention de données qui contiennent des informations relatives à une carte routière, afin de créer une carte routière,
- le choix d'une route particulière de la carte,
- l'obtention de données qui contiennent des informations relatives aux coûts monétaires, les informations relatives aux coûts contenant des informations concernant les coûts liés au choix de ladite route particulière sur la carte,
comprenant en outre la détermination de différents itinéraires sur la carte routière jusqu'à une destination prédéterminée, et la détermination des coûts liés au choix de chaque itinéraire,
comprenant en outre les étapes suivantes
- détermination de l'itinéraire induisant les moindres coûts jusqu'à ladite destination prédéterminée,
- calcul de l'itinéraire le plus rapide induisant le temps de trajet le plus court jusqu'à ladite destination prédéterminée,
- calcul de l'itinéraire le plus court jusqu'à ladite destination prédéterminée,
- détermination des coûts de l'itinéraire le plus rapide et le plus court,
- production d'un rapport des temps de parcours de l'itinéraire le plus rapide à l'itinéraire le plus court, d'un rapport des temps de parcours de l'itinéraire le plus rapide à l'itinéraire aux moindres coûts et d'un rapport des temps de parcours de l'itinéraire le plus court à l'itinéraire aux moindres coûts, et des rapports des différents coûts, et
- choix d'un des itinéraires calculés comme l'itinéraire optimal jusqu'à ladite destination prédéterminée par prise en compte desdits rapports déterminés précédemment.

14. Procédé selon la revendication 13, dans lequel l'étape de détermination des coûts liés au choix d'un itinéraire déterminé comprend les étapes suivantes :
- détermination de premiers coûts, en fonction de la distance parcourue jusqu'à ladite destination prédéterminée et/ou
- la détermination de deuxièmes coûts en fonction de l'itinéraire choisi.

15. Procédé selon la revendication 14, dans lequel la détermination des premiers coûts comprend l'étape de
- détermination d'une valeur prédéterminée des coûts inhérents à un véhicule selon la distance en fonction du type de véhicule utilisé, et
- calcul des premiers coûts par multiplication des coûts inhérents au véhicule selon la distance par la distance de l'itinéraire déterminé.

16. Procédé selon la revendication 15, dans lequel la détermination des deuxièmes coûts comprend l'étape de récapitulation des coûts en fonction de l'itinéraire choisi, qui vient en lien avec l'emprunt dudit itinéraire choisi, les deuxièmes coûts comprenant soit les coûts de péage, soit les coûts de vignettes, soit les coûts de bac, soit les taxes de tunnel, soit les péages selon distance, soit les péages pour transport ferroviaire de voitures.

17. Procédé selon l'une quelconque des revendications 14 à 16, comprenant l'étape de calcul d'un itinéraire induisant les moindres coûts jusqu'à ladite destination prédéterminée en prenant en compte les premiers coûts et/ ou les deuxièmes coûts.

18. Procédé selon la revendication 14 ou 17, **caractérisé en ce que** pour le calcul des deuxièmes coûts, les données contenant des informations relatives à l'utilisateur sont prises en compte, lesdites données contenant des informations indiquant si l'utilisateur du dispositif de navigation possède déjà un moyen nécessaire pour l'emprunt d'un itinéraire particulier, si bien que ces informations peuvent être prises en considération pour le calcul des deuxièmes coûts de l'itinéraire jusqu'à la destination prédéterminée.

19. Procédé selon la revendication 18, dans lequel le moyen nécessaire pour l'emprunt d'un itinéraire particulier comprend des vignettes.

20. Procédé selon l'une quelconque des revendications 13 à 19, comprenant en outre l'étape de calcul du temps de parcours jusqu'à la destination prédéterminée.

21. Procédé selon la revendication 20, dans lequel les données contenant des informations relatives à l'utilisateur sont prises en compte pour le calcul du temps de trajet, le temps de trajet dépendant du fait que l'utilisateur d'une route particulière détienne un moyen d'emprunt de ladite route particulière, ou du fait du type de moyen que l'utilisateur possède.

22. Procédé selon la revendication 13, dans lequel le calcul de l'itinéraire qui est le plus rapide, le plus court, optimal et qui a les coûts moindres est effectué pour chaque section de la route, la carte routière étant divisée en différentes sections de route.

23. Procédé selon l'une quelconque des revendications 13 à 22, dans lequel les facteurs de pondération sont introduits pour l'itinéraire qui est le plus court, le plus rapide et qui induit les moindres coûts, qui sont utilisés pour le calcul de l'itinéraire optimal.

24. Procédé selon l'une quelconque des revendications 13 à 19, dans lequel pour déterminer l'itinéraire jusqu'à une destination prédéterminée, des itinéraires pour lesquels de deuxièmes coûts sont induits en lien avec l'emprunt d'un itinéraire particulier sont évités voire exclus.
